# EUROPEAN PATENT APPLICATION

(11) **EP 4 821 988 A1**
(43) Date of publication of application: **14.10.2026**
(21) Application number: 24900304.7
(22) Date of filing: 17.10.2024
(51) Int. Cl.: C08L 83/07, C08K 3/22, C08K 3/28, C08L 83/05

(54) **THERMALLY CONDUCTIVE ADDITION-CURABLE SILICONE COMPOSITION AND METHOD FOR PRODUCING THERMALLY CONDUCTIVE ADDITION-CURABLE SILICONE COMPOSITION**

(30) Priority: 08.12.2023 JP 2023207840
(71) Applicant: SHIN-ETSU CHEMICAL CO., LTD., Tokyo 100-0005 (JP)
(72) Inventor: KITAZAWA, Keita, Annaka-shi, Gunma 379-0224 (JP)
(74) Representative: Schicker, Silvia
(86) International application number: PCT/JP2024/036988
(87) International publication number: WO 2025/121008

(57) **Abstract**

The present invention is a thermally conductive addition-curable silicone composition including: (A) an organopolysiloxane having at least one aliphatic unsaturated hydrocarbon group in one molecule and a kinematic viscosity of 60 to 100,000 mm²/s at 25°C; (B) a thermally conductive filler containing amorphous aluminum nitride powder and amorphous zinc oxide powder; (C) an organohydrogenpolysiloxane having two or more hydrogen atoms bonded to silicon atom in one molecule; (D) a platinum group metal catalyst; (E) an organopolysiloxane represented by the following general formula (1); and (F) one or more addition-curing reaction control agents selected from the group consisting of an acetylene compound, a nitrogen compound, an organophosphorus compound, an oxime compound, and an organochloro compound. This provides a thermally conductive addition-curable silicone composition in which the time required for the storage modulus G' to exceed the loss modulus G" is short when heat-cured and the storage stability at 25°C is favorable, and a method for manufacturing the same.

## Description

### TECHNICAL FIELD

The present invention relates to a thermally conductive addition-curable silicone composition and a method for manufacturing the same.

### BACKGROUND ART

A common issue for electronic component packages and power modules is widely known to be the heat generation during operation and the resulting performance degradation, and as a means for solving this issue, various heat dissipation technologies are used. In particular, a common technique involves placing a cooling member in the vicinity of the heat-generating portion, bringing the two into close contact, and then efficiently removing heat by the cooling member to dissipate the heat.

In this case, with a gap between the heat-generating portion and the cooling member, the presence of air that has poor thermal conductivity reduces heat transfer therebetween and the temperature of the heat-generating member does not sufficiently decrease. To prevent such a presence of air and improve thermal conduction, heat dissipation materials with favorable thermal conductivity and conformability to the surface of the member, such as heat dissipation grease or heat dissipation sheets, are used.

For actual thermal management of electronic component packages and power modules, heat dissipation grease that can be compressed to be thin and has excellent penetration into the gap between the heat-generating portion and the cooling member is preferable from the viewpoint of heat dissipation performance. An addition-curable heat dissipation grease (for example, in Patent Document 1) is particularly useful because the leakage of the heat dissipation grease (pumping out) caused by expansion and contraction due to the thermal history of repeated heating and cooling of the heat-generating portion can be suppressed by further compressing the grease to a desired thickness and then heat-curing it, and thus the reliability of electronic component packages and power modules can be improved.

In recent years, because of the progressive enlargement of the area and complication of the structure of electronic component packages and power modules, significant warping may occur in the electronic component packages and power modules. In the electronic component packages and power modules with large warping, it is crucial to precisely control the curability of addition-curable heat dissipation grease, and specifically, it is preferable that the time required for the storage modulus G' to exceed the loss modulus G" is shorter when heat-cured. Generally, this can be achieved by increasing the amount of a platinum group metal catalyst, but as a trade-off, the storage stability at 25°C deteriorates, which may result in a shorter pot life.

### CITATION LIST

### PATENT LITERATURE

Patent Document 1: JP 2016-053140 A

### SUMMARY OF INVENTION

### TECHNICAL PROBLEM

That is, there is a demand for a thermally conductive addition-curable silicone composition in which the time required for a storage modulus G' to exceed the loss modulus G" is short when heat-cured and the storage stability at 25°C is favorable.

The present invention has been made in view of the above problems, and an object thereof is to provide a thermally conductive addition-curable silicone composition in which the time required for the storage modulus G' to exceed the loss modulus G" is short when heat-cured, and the storage stability at 25°C is favorable, and a method for manufacturing the same.

### SOLUTION TO PROBLEM

To solve the above problems, the present invention provides a thermally conductive addition-curable silicone composition, including:
(A) an organopolysiloxane having at least one aliphatic unsaturated hydrocarbon group in one molecule and a kinematic viscosity of 60 to 100,000 mm²/s at 25°C: in an amount of 1.5 to 90 mass% based on the total composition;
(B) a thermally conductive filler containing amorphous aluminum nitride powder and amorphous zinc oxide powder: an amount of 8 to 96 mass% based on the total composition;
(C) an organohydrogenpolysiloxane having two or more hydrogen atoms bonded to silicon atom in one molecule: an amount such that the number of Si-H groups in a component (C) is 0.5 to 10 based on the total number of aliphatic unsaturated hydrocarbon groups in the component (A);
(D) a platinum group metal catalyst: an effective amount;
(E) an organopolysiloxane represented by the following general formula (1): an amount of 0.5 to 10 mass% based on the total composition, 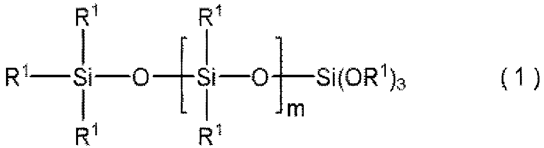 wherein R¹ represents a monovalent hydrocarbon group having 1 to 18 carbon atoms and optionally having a substituent and represents a monovalent hydrocarbon group not including an aliphatic unsaturated bond, each R¹ is the same or different, and m is an integer of 5 to 100; and
(F) one or more addition-curing reaction control agents selected from the group consisting of acetylene compounds, a nitrogen compound, organophosphorus compounds, oxime compounds, and organochloro compounds: an effective amount.

Such a thermally conductive addition-curable silicone composition is such that the time required for the storage modulus G' to exceed the loss modulus G'' is short when heat-cured, and the storage stability at 25°C is favorable.

In this case, it is preferable that the thermally conductive addition-curable silicone composition of the present invention is one in which the component (C) is an organohydrogenpolysiloxane having two epoxy ring-containing organic groups in one molecule.

Such a thermally conductive addition-curable silicone composition can achieve favorable adhesion between the heat-generating portion and the cooling member.

Further, it is preferable that the thermally conductive addition-curable silicone composition of the present invention is such that the time required for the storage modulus G' to exceed the loss modulus G'' is 500 seconds or less when the storage modulus G' and loss modulus G'' of the thermally conductive addition-curable silicone composition are measured using a viscoelasticity measuring device capable of measuring shear elasticity while the temperature is maintained at 150°C for 7,200 seconds after raised from 25°C to 150°C at 5°C/min, and it takes 5 days or more for the viscosity of the thermally conductive addition-curable silicone composition stored at 25°C to exceed 1,000 Pa·s.

Such a thermally conductive addition-curable silicone composition is such that the time required for the storage modulus G' to exceed the loss modulus G'' is short when heat-cured, and the storage stability at 25°C is favorable, and thus can be suitably used for electronic component packages and power modules with large warping.

The present invention further provides a method for manufacturing a thermally conductive addition-curable silicone composition, the method including the steps of:
preparing the following components:
(A) an organopolysiloxane having at least one aliphatic unsaturated hydrocarbon group in one molecule and a kinematic viscosity of 60 to 100,000 mm²/s at 25°C: an amount of 1.5 to 90 mass% based the total composition;
(B) a thermally conductive filler containing amorphous aluminum nitride powder and amorphous zinc oxide powder: an amount of 8 to 96 mass% based on the total composition;
(C) an organohydrogenpolysiloxane having two or more hydrogen atoms bonded to silicon atom in one molecule: an amount such that the number of Si-H groups in a component (C) is 0.5 to 10 based on the total number of aliphatic unsaturated hydrocarbon groups in the component (A);
(D) a platinum group metal catalyst: an effective amount;
(E) an organopolysiloxane represented by the following general formula (1): an amount of 0.5 to 10 mass% based on the total composition, 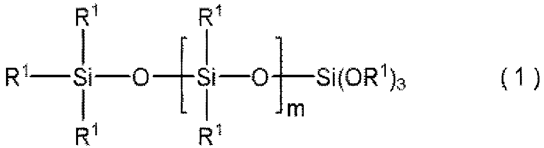 in which R¹ represents a monovalent hydrocarbon group having 1 to 18 carbon atoms and optionally having a substituent and represents a monovalent hydrocarbon group not including an aliphatic unsaturated bond, each R¹ may be the same or different, and m is an integer of 5 to 100; and
(F) one or more addition-curing reaction control agents selected from the group consisting of an acetylene compound, a nitrogen compound, an organophosphorus compound, an oxime compound, and an organochloro compound: an effective amount; and
   mixing the above components (A) to (F) while heating at 40 to 170°C.

By this method for manufacturing the thermally conductive addition-curable silicone composition of the present invention, a thermally conductive addition-curable silicone composition of the present invention in which the time required for the storage modulus G' to exceed the loss modulus G'' is short when heat-cured, and the storage stability at 25°C is favorable can be manufactured.

Further, the method for manufacturing the thermally conductive addition-curable silicone composition of the present invention is preferably a method in which, in terms of the thermally conductive addition-curable silicone composition obtained by the method, the time required for the storage modulus G' to exceed the loss modulus G'' is 500 seconds or less when the storage modulus G' and loss modulus G'' of the thermally conductive addition-curable silicone composition are measured using a viscoelasticity measuring device capable of measuring shear elasticity while the temperature is maintained at 150°C for 7,200 seconds after raised from 25°C to 150°C at 5°C/min, and it takes 5 days or more for the viscosity of the thermally conductive addition-curable silicone composition stored at 25°C to exceed 1,000 Pa·s.

This method for manufacturing a thermally conductive addition-curable silicone composition according to the present invention can reliably provide a thermally conductive addition-curable silicone composition that can be suitably used for electronic component packages and power modules with large warping.

### ADVANTAGEOUS EFFECTS OF INVENTION

The thermally conductive addition-curable silicone composition of the present invention is such that the time required for the storage modulus G' to exceed the loss modulus G'' is short when heat-cured, and the storage stability at 25°C is favorable. As a result, the composition can be suitably used for electronic component packages and power modules with large warping. In addition, the method for manufacturing the thermally conductive addition-curable silicone composition of the present invention can reliably provide a thermally conductive addition-curable silicone composition that can be suitably used for electronic component packages and power modules with large warping.

### DESCRIPTION OF EMBODIMENTS

As described above, there has been a need to develop a thermally conductive addition-curable silicone composition in which the time required for the storage modulus G' to exceed the loss modulus G'' is short when heat-cured, and the storage stability at 25°C is favorable.

As a result of diligent research into the above-described problems, the present inventors have found that a thermally conductive addition-curable silicone composition including the components (A) to (F) above can be such that the time required for the storage modulus G' to exceed the loss modulus G'' is 500 seconds or less when the storage modulus G' and loss modulus G'' of the thermally conductive addition-curable silicone composition are measured using a viscoelasticity measuring device capable of measuring shear elasticity while the temperature is maintained at 150°C for 7,200 seconds after raised from 25°C to 150°C at 5°C/min, and it takes 5 days or more for the viscosity of the thermally conductive addition-curable silicone composition stored at 25°C to exceed 1,000 Pa·s, thus the inventors has completed the present invention.

That is, the present invention is a thermally conductive addition-curable silicone composition, comprising:
(A) an organopolysiloxane having at least one aliphatic unsaturated hydrocarbon group in one molecule and a kinematic viscosity of 60 to 100,000 mm²/s at 25°C: an amount of 1.5 to 90 mass% based on the total composition;
(B) a thermally conductive filler containing amorphous aluminum nitride powder and amorphous zinc oxide powder: an amount of 8 to 96 mass% based on the total composition;
(C) an organohydrogenpolysiloxane having two or more hydrogen atoms bonded to silicon atom in one molecule: an amount such that the number of Si-H groups in a component (C) is 0.5 to 10 based on the total number of aliphatic unsaturated hydrocarbon groups in the component (A);
(D) a platinum group metal catalyst: an effective amount;
(E) an organopolysiloxane represented by the following general formula (1): an amount of 0.5 to 10 mass% based on the total composition, 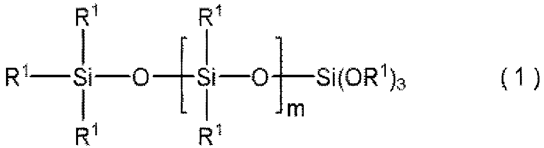 wherein R¹ represents a monovalent hydrocarbon group having 1 to 18 carbon atoms and optionally having a substituent, and represents a monovalent hydrocarbon group not including an aliphatic unsaturated bond, each R¹ may be the same or different, and m is an integer of 5 to 100; and
(F) one or more addition-curing reaction control agents selected from the group consisting of acetylene compounds, nitrogen compounds, organophosphorus compounds, oxime compounds, and organochloro compounds: an effective amount.

The present invention will be described in detail below, but the present invention is not limited thereto.

### [Component (A)]

The component (A) is an organopolysiloxane having at least one, preferably 1 to 100, more preferably 2 to 50 aliphatic unsaturated hydrocarbon groups in one molecule, and having a kinematic viscosity of 60 to 100,000 mm²/s at 25°C.

The aliphatic unsaturated hydrocarbon group is preferably a monovalent hydrocarbon group having 2 to 8 carbon atoms, more preferably 2 to 6 carbon atoms, and having an aliphatic unsaturated bond, and even more preferably, an alkenyl group. Examples thereof include alkenyl groups such as a vinyl group, an allyl group, a propenyl group, an isopropenyl group, a butenyl group, a hexenyl group, a cyclohexenyl group, and an octenyl group. The vinyl group is particularly preferable. The aliphatic unsaturated hydrocarbon group may be bonded to a silicon atom at the end of the molecular chain, a silicon atom in the middle of the molecular chain, or both.

The organic group other than the aliphatic unsaturated hydrocarbon group bonded to the silicon atom of the organopolysiloxane is an unsubstituted or substituted monovalent hydrocarbon group having 1 to 18 carbon atoms, preferably 1 to 10 carbon atoms, and more preferably 1 to 8 carbon atoms. Examples thereof include: alkyl groups such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, and a decyl group; aryl groups such as a phenyl group, a tolyl group, a xylyl group, and a naphthyl group; aralkyl groups such as a benzyl group, a phenylethyl group, and a phenylpropyl group; or groups in which some or all of the hydrogen atoms of these groups are substituted with halogen atoms such as fluorine, bromine, or chlorine, a cyano group, for example such as a chloromethyl group, a chloropropyl group, a bromoethyl group, a trifluoropropyl group, and a cyanoethyl group. In particular, the methyl group and trifluoropropyl group are preferable.

The above organopolysiloxane has a kinematic viscosity at 25°C of 60 to 100,000 mm²/s, preferably 100 to 30,000 mm²/s. When the kinematic viscosity is less than 60 mm²/s, the physical characteristics of the thermally conductive addition-curable silicone composition of the present invention deteriorates, and when exceeds 100,000 mm²/s, the extensibility of the silicone composition becomes poor.

In the present invention, the kinematic viscosity is the value measured at 25°C using an Ubbelohde-type Ostwald viscometer (the same applies hereinafter).

The molecular structure of the organopolysiloxane is not particularly limited as long as it has the above-described properties, and examples thereof include a linear structure, a branched structure, and a linear structure having a partially branched structure or cyclic structure. In particular, it is preferable that the main chain is composed of repeating diorganosiloxane units and has a linear structure in which both ends of the molecular chain are capped with triorganosiloxy groups. The organopolysiloxane having a linear structure may also partially have a branched or cyclic structure.

The amount of the component (A) blended is 1.5 to 90 mass%, preferably 2 to 20 mass%, based on the total composition. In the case of more than 90 mass%, the thermal conductivity may be poor, and in the case of less than 1.5 mass%, the viscosity of the thermally conductive addition-curable silicone composition of the present invention may increase significantly, which reduces workability.

One kind of organopolysiloxane can be used singly or two or more kinds thereof can be used in combination.

### [Component (B)]

The component (B) is a thermally conductive filler including amorphous aluminum nitride powder and amorphous zinc oxide powder in order to obtain a thermally conductive addition-curable silicone composition in which high thermal conductivity is achieved, the time required for the storage modulus G' to exceed the loss modulus G'' is short when heat-cured, and favorable storage stability at 25°C can be realized. In the present invention, the shapes of the aluminum nitride powder and zinc oxide powder are amorphous, preferably polyhedral.

Using polyhedral aluminum nitride powder improves curability even with low amounts of platinum group metal catalysts, making it possible to achieve a favorable pot life. In addition, the physical entanglement of the polyhedral aluminum nitride powder improves G'. For the subfiller zinc oxide powder, an amorphous one is preferable considering thermal conductivity.

In addition, the component (B) is preferably a combination of aluminum nitride powder as a large-particle component and zinc oxide powder as a small-particle component. The average particle diameter of the aluminum nitride powder as a large-particle component is preferably in the range of 1 to 300 µm, more preferably in the range of 3 to 200 µm, still more preferably in the range of 5 to 150 µm, and even more preferably in the range of 6 to 50 µm. The average particle diameter of the zinc oxide powder as a small-particle component is preferably in the range of 0.01 µm to 10 µm, and more preferably in the range of 0.1 to 5 µm. When the average particle diameter of the aluminum nitride powder as a large-particle component is in the range of 1 to 300 µm, and the average particle diameter of the zinc oxide powder as a small-particle component is in the range of 0.01 µm to 10 µm, the thermally conductive addition-curable silicone composition of the present invention does not have excessively high viscosity, has excellent extensibility, and the resulting silicone composition becomes uniform. The ratio of the aluminum nitride powder as a large-particle component to the zinc oxide powder as a small-particle component is not particularly limited, but a range of 9:1 to 1:9 (mass ratio) is preferable. This range is preferable because of allowing a balance between appropriate viscosity and thermal conductivity.

Note that the average particle diameter can be determined, for example, as the average value (median diameter) based on volume in particle size distribution measurement by laser diffraction.

The amount of the component (B) blended is 8 to 96 mass%, preferably 40 to 95.5 mass%, and more preferably 70 to 95 mass%, based on the total composition. In the case of more than 96 mass%, the thermally conductive addition-curable silicone composition of the present invention is poor in extensibility, and in a case of less than 8 mass%, it is poor in thermal conductivity.

### [Component (C)]

The component (C) is an organohydrogenpolysiloxane having two or more hydrogen atoms bonded to silicon atom (Si-H groups) in one molecule, preferably 2 to 100 hydrogen atoms bonded to silicon atom (Si-H groups), more preferably 2 to 50 hydrogen atoms bonded to silicon atom (Si-H groups). The organohydrogenpolysiloxane may be one in which the Si-H groups in the molecule can undergo an addition reaction with the aliphatic unsaturated hydrocarbon groups of the component (A) described above in the presence of a platinum group metal catalyst to form a crosslinked structure.

The molecular structure of the above-described organohydrogenpolysiloxane is not particularly limited as long as it has the above-described properties, and examples thereof include a linear structure, a branched structure, a cyclic structure, or a linear structure having a partially branched structure or a cyclic structure. The linear structure or the cyclic structure is preferable.

The kinematic viscosity at 25°C of the above organohydrogen polysiloxane is preferably 1 to 1,000 mm²/s, more preferably 10 to 300 mm²/s. When the kinematic viscosity is in the range of 1 to 1,000 mm²/s, the physical characteristics of the thermally conductive addition-curable silicone composition of the present invention are favorable, and the extensibility of the silicone composition is excellent.

Examples of the organic group bonded to the silicon atom of the above organohydrogenpolysiloxane include unsubstituted or substituted monovalent hydrocarbon groups other than aliphatic unsaturated hydrocarbon groups. In particular, these are unsubstituted or substituted monovalent hydrocarbon groups having 1 to 12 carbon atoms, preferably 1 to 10 carbon atoms. Examples thereof include: alkyl groups such as a methyl group, an ethyl group, a propyl group, a butyl group, a hexyl group, and a dodecyl group; aryl groups such as a phenyl group; aralkyl groups such as a 2-phenylethyl group and a 2-phenylpropyl group; and those in which some or all of the hydrogen atoms are substituted with halogen atoms such as fluorine, bromine, and chlorine, a cyano group, and an epoxy ring-containing organic group (a glycidyl group or glycidyloxy-substituted alkyl group) for example such as a chloromethyl group, a chloropropyl group, a bromoethyl group, a trifluoropropyl group, a cyanoethyl group, a 2-glycidoxyethyl group, a 3-glycidoxypropyl group, and a 4-glycidoxybutyl group. Among these, a methyl group and an epoxy ring-containing organic group are preferable. In particular, the epoxy ring-containing organic group is preferable because of allowing favorable adhesion between the heat-generating portion and the cooling member.

One kind of organohydrogenpolysiloxane described above may be used singly or a mixture of two or more kinds thereof may be used, and it is preferable that at least one kind thereof is an organohydrogenpolysiloxane having two epoxy ring-containing organic groups and two or more hydrogen atoms bonded to silicon atom in one molecule.

The amount of organohydrogenpolysiloxane blended in the component (C) is such that the number of SiH groups in the component (C) is 0.5 to 10 based on the total number of aliphatic unsaturated hydrocarbon groups in the component (A), preferably 0.7 to 7.5, and more preferably 1.0 to 5.0. When the amount of the component (C) is less than 0.5, the addition reaction does not proceed sufficiently, resulting in insufficient crosslinking. In addition, when the amount of the component (C) exceeds 10, the crosslinking structure may become non-uniform, or the storage stability of the thermally conductive addition-curable silicone composition of the present invention may be significantly deteriorated.

### [Component (D)]

The component (D) is a platinum group metal catalyst and functions to promote the addition reaction of the above-described components. A conventionally known platinum group metal catalyst used in the addition reaction can be used. Examples thereof include platinum-based, palladium-based, and rhodium-based catalysts, and among these, platinum or platinum compounds, which are relatively readily available, are preferable. Examples thereof include elemental platinum, platinum black, chloroplatinic acid, a platinum-olefin complex, a platinum-alcohol complex, and a platinum coordination compound. One kind of platinum group metal catalyst may be used singly or two or more kinds thereof may be used in combination.

The amount of the component (D) blended may be an effective amount as a catalyst, that is, an effective amount necessary to promote the addition reaction and cure the thermally conductive addition-curable silicone composition of the present invention. Preferably, the amount is 0.01 to 10 ppm, more preferably 0.1 to 5 ppm, and still more preferably 0.2 to 3 ppm, on a mass basis calculated in terms of platinum-group metal atoms based on the total composition. An amount of the catalyst of 0.01 to 10 ppm is preferable because sufficient catalytic effect is provided resulting in lower cost, and the storage stability at 25°C becomes favorable.

In addition, when the platinum group metal catalyst of the component (D) is used, it may be diluted with an organo(poly)siloxane or toluene or the like to improve the dispersibility in the thermally conductive addition-curable silicone composition of the present invention.

### [Component (E)]

The component (E) is used to treat the surface of the thermally conductive filler and plays a role in assisting in the high-filling of the filler 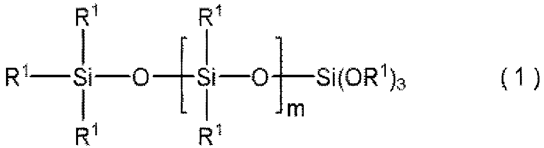 in which, R¹ represents a monovalent hydrocarbon group having 1 to 18 carbon atoms, and optionally having a substituent, and not including an aliphatic unsaturated bond, each R¹ may be the same or different, m is an integer of 5 to 100.

The above R¹ is a monovalent hydrocarbon group having 1 to 18 carbon atoms, optionally having a substituent, preferably a monovalent saturated aliphatic hydrocarbon group optionally having a substituent, a monovalent aromatic hydrocarbon group optionally having a substituent, and particularly preferably a monovalent saturated aliphatic hydrocarbon group optionally having a substituent.

Specific examples of the monovalent saturated aliphatic hydrocarbon group optionally having a substituent include monovalent saturated aliphatic hydrocarbon groups such as: linear alkyl groups such as a methyl group, an ethyl group, a propyl group, a butyl group, a pentyl group, a hexyl group, a heptyl group, an octyl group, a nonyl group, and a decyl group; branched alkyl groups such as an isopropyl group, an isobutyl group, a tert-butyl group, an isopentyl group, and a neopentyl group; cycloalkyl groups such as a cyclopentyl group, a cyclohexyl group, and a cycloheptyl group; and halogen-substituted alkyl groups such as a chloromethyl group, a 3-chloropropyl group, a 3,3,3-trifluoropropyl group, and a bromopropyl group. The number of carbon atoms is preferably 1 to 10, more preferably 1 to 8, and still more preferably 1 to 6.

Specific examples of the monovalent aromatic hydrocarbon group optionally having a substituent include: aryl groups such as a phenyl group and a tolyl group; aralkyl groups such as a benzyl group and a 2-phenylethyl group; and halogen-substituted aryl groups such as a α,α,α-trifluorotolyl group and a chlorobenzyl group. The number of carbon atoms is preferably 6 to 10, more preferably 6 to 8, and still more preferably 6.

Among these, R¹ is preferably a methyl group, an ethyl group, a 3,3,3-trifluoropropyl group, or a phenyl group, more preferably a methyl group, an ethyl group, or a phenyl group, and particularly preferably a methyl group.

m is an integer of 5 and 100, preferably 5 and 80, and more preferably 10 and 60. When the value of m is less than 5, oil bleeding originating from the thermally conductive addition-curable silicone composition of the present invention cannot be suppressed, the resistance to pumping-out becomes poor. In addition, when the value of m is 100 or more, the wettability with the filler is insufficient, the viscosity of the silicone composition increases, and the workability on application deteriorates.

The amount of the component (E) blended is 0.5 to 10 mass%, preferably 1.0 to 8.0 mass%, based on the total composition. When the blending amount is less than 0.5 mass% or more than 10 mass%, the thermally conductive silicone composition of the present invention cannot be made within an appropriate viscosity range, and the resistance to pumping out becomes poor.

One kind of component (E) may be used singly or two or more kinds thereof may be used in combination.

### [Component (F)]

The component (F) is a reaction control agent that suppresses the progress of the hydrosilylation reaction at room temperature and can be added to extend shelf life and pot life. The reaction control agent can be a conventionally known reaction control agent used in thermally conductive addition-curable silicone compositions. Examples thereof include: acetylene compounds such as acetylene alcohols (for example, ethynylmethyldecylcarbinol, 1-ethynyl-1-cyclohexanol, 3,5-dimethyl-1-hexyne-3-ol); various nitrogen compounds such as tributylamine, tetramethylethylenediamine, and benzotriazole; organophosphorus compounds such as triphenylphosphine; oxime compounds; and organochloro compounds.

The amount of the component (F) blended may be an effective amount as a reaction control agent, that is, an effective amount necessary to obtain the desired shelf life and pot life. Preferably, the amount is 0.05 to 5 parts by mass, more preferably 0.1 to 2 parts by mass, based on 100 parts by mass of the component (A). When the amount of reaction control agent is 0.05 to 5 parts by mass, the desired sufficient shelf life and pot life can be obtained, and there is no risk of a decrease in the curability of the thermally conductive addition-curable silicone composition.

In addition, when the reaction control agent is used, it may be diluted with an organo(poly)siloxane, toluene, or the like to improve the dispersibility in the thermally conductive addition-curable silicone composition of the present invention.

### [Other components]

The thermally conductive addition-curable silicone composition of the present invention may contain nonreactive organo(poly)siloxanes such as methylpolysiloxane to adjust the strength and viscosity of the composition. Further, hydrolyzable organopolysiloxanes, various modified silicones, and hydrolyzable organosilanes may be added to the above silicone composition for the purpose of imparting adhesion. Further, a solvent may be added to adjust the viscosity of the silicone composition. Further, to prevent degradation of the silicone composition, a conventionally known antioxidant, such as 2,6-di-tert-butyl-4-methylphenol, may be contained as necessary. Further, dyes, pigments, flame retardants, anti-settling agents, or thixotropic enhancers, or the like may be added as necessary.

The thermally conductive addition-curable silicone composition of the present invention including the components (A) to (F) above, and the other components as necessary, can be such that the time required for the storage modulus G' to exceed the loss modulus G" is 500 seconds or less when the storage modulus G' and loss modulus G" of the thermally conductive addition-curable silicone composition are measured using a viscoelasticity measuring device capable of measuring shear elasticity while the temperature is maintained at 150°C for 7,200 seconds after raised from 25°C to 150°C at 5°C/min, and it takes 5 days or more for the viscosity of the thermally conductive addition-curable silicone composition stored at 25°C to exceed 1,000 Pa·s.

Such a thermally conductive addition-curable silicone composition is such that the time required for the storage modulus G' to exceed the loss modulus G" is short when heat-cured, and the storage stability at 25°C is favorable. As a result, the composition can be suitably used for electronic component packages and power modules with large warping.

In the thermally conductive addition-curable silicone composition of the present invention described above, the time required for the storage modulus G' to exceed the loss modulus G" is measured by applying the thermally conductive addition-curable silicone composition of the present invention at a thickness of 2 mm between two parallel plates with a diameter of 2.5 cm, creating a program to maintain the temperature at 150°C for 7,200 seconds after heating the coated plates from 25°C to 150°C at 5°C/min, and reading the time required for the storage modulus to exceed the loss modulus. Note that for the measurement, a viscoelasticity measuring device (ARES-G2, manufactured by TA Instruments, Inc.) is used.

### [Step for fabricating thermally conductive addition-curable silicone composition]

The method for manufacturing the thermally conductive addition-curable silicone composition according to the present invention will be described below. The method for manufacturing the thermally conductive addition-curable silicone composition according to the present invention is not particularly limited, but it includes a step of preparing each component, which includes the above-described components (A) to (F), and, as necessary, other components in addition thereto.

An example of a method is to mix the prepared components (A) to (F) described above, and other components to be added thereto as necessary, using a mixer such as Trimix, Twinmix, Planetary Mixer (all registered trademarks of mixers manufactured by INOUE MFG., INC.), Ultra Mixer (a registered trademark of a mixer manufactured by MIZUHO INDUSTRIAL CO., LTD.), or HIVIS MIX (a registered trademark of a mixer manufactured by PRIMIX Corporation) for 3 minutes to 24 hours, more preferably 5 minutes to 12 hours, and particularly preferably 10 minutes to 6 hours. In addition, degassing may be performed during mixing, and mixing is performed while heating in the range of 40 to 170°C. At less than 40°C, the component (B) may not disperse properly, and at more than 170°C, the component (E) may deteriorate, thus these temperatures are not preferable.

In the present invention, it is preferable to mix the components (A), (B), and (E) at 170°C first, and then to mix the components (C), (D), and (F) at 25°C, from the viewpoint that the thermally conductive addition-curable silicone composition of the present invention exhibits favorable thermal conductivity.

The viscosity measured at 25°C for the thermally conductive addition-curable silicone composition of the present invention is preferably 10 to 1,000 Pa·s, more preferably 20 to 700 Pa·s, and still more preferably 40 to 500 Pa·s. When the viscosity is in the range of 10 to 1,000 Pa·s, for example, the shape is easily maintained, the silver powder does not settle, and the workability is improved such as dispensing and application are easy.

The viscosity of the thermally conductive addition-curable silicone composition of the present invention is measured at 25°C using a Malcolm viscometer (Type PC-1T) (rotor A at 10 rpm, shear rate 6 [1/s]).

In addition, the thermally conductive addition-curable silicone composition of the present invention typically has a thermal conductivity of 0.5 to 100 W/m·K, and it is preferable to have a thermal conductivity of 4.0 W/m·K or more in order to exhibit excellent heat dissipation performance when mounted on electronic component packages or power modules.

The thermal conductivity is measured by wrapping the thermally conductive addition-curable silicone composition in kitchen wrap and using a TPS-2500S manufactured by KYOTO ELECTRONICS MANUFACTURING CO., LTD.

The curing conditions for heat-curing the thermally conductive addition-curable silicone composition of the present invention are not particularly limited, but are preferably 80 to 200°C, more preferably 100 to 180°C, for 15 minutes to 4 hours, and preferably 30 minutes to 2 hours.

In addition, by the method for manufacturing the thermally conductive addition-curable silicone composition of the present invention, a composition in which the time required for the storage modulus G' to exceed the loss modulus G" is 500 seconds or less when the storage modulus G' and loss modulus G" of the thermally conductive addition-curable silicone composition are measured using a viscoelasticity measuring device capable of measuring shear elasticity while the temperature is maintained at 150°C for 7,200 seconds after raised from 25°C to 150°C at 5°C/min, and it takes 5 days or more for the viscosity of the thermally conductive addition-curable silicone composition stored at 25°C to exceed 1,000 Pa·s, can be manufactured.

### EXAMPLE

The present invention will be specifically described below using examples and comparative examples, but the present invention is not limited thereto.

Note that the kinematic viscosity is the value at 25°C measured with an Ubbelohde-type Ostwald viscometer.

The following components (A) to (F) and component (G) as another component were provided to prepare the thermally conductive addition-curable silicone composition of the present invention.

### [Component (A)]

A-1: Dimethylpolysiloxane with both ends capped with dimethylvinylsilyl groups and a kinematic viscosity of 30,000 mm²/s at 25°C
(vinyl group amount = 0.00004 mol/g)
A-2: Dimethylpolysiloxane with both ends capped with dimethylvinylsilyl groups and a kinematic viscosity of 10,000 mm²/s at 25°C
(vinyl group amount = 0.00005 mol/g)
A-3: Dimethylpolysiloxane with both ends capped with dimethylvinylsilyl groups and a kinematic viscosity of 5,000 mm²/s at 25°C
(vinyl group amount = 0.00007 mol/g)
A-4: Dimethylpolysiloxane with both ends capped with dimethylvinylsilyl groups and a kinematic viscosity of 600 mm²/s at 25°C
(vinyl group amount = 0.00014 mol/g)
A-5: Dimethylpolysiloxane with both ends capped with trivinylsilyl groups and a kinematic viscosity of 1,500 mm²/s at 25°C
(vinyl group amount = 0.00026 mol/g)

### [Component (B)]

B-1: Polyhedral aluminum nitride powder with an average particle diameter of 20 µm and a specific surface area of 0.3 m²/g
B-2: Polyhedral aluminum nitride powder with an average particle diameter of 8 µm and a specific surface area of 0.7 m²/g
B-3: Polyhedral zinc oxide powder with an average particle diameter of 0.4 µm and a specific surface area of 3.5 m²/g
b-4: Spherical aluminum powder with an average particle diameter of 24 µm and a specific surface area of 0.2 m²/g
b-5: Spherical aluminum powder with an average particle diameter of 12 µm and a specific surface area of 0.4 m²/g
b-6: Spherical aluminum nitride powder with an average particle diameter of 30 µm and a specific surface area of 0.08 m²/g

### [Component (C)]

C-1: Methylhydrogendimethylpolysiloxane represented by the following formula (2)
(SiH amount = 0.0043 mol/g) 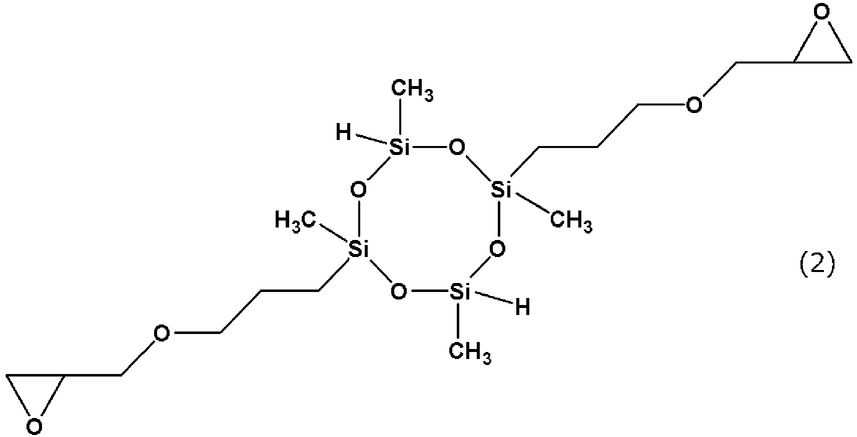
C-2: Methylhydrogendimethylpolysiloxane represented by the following formula (3)
(SiH amount = 0.0055 mol/g) 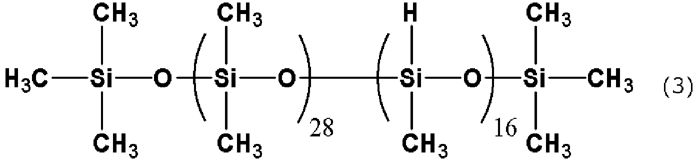
C-3: Methylhydrogendimethylpolysiloxane represented by the following formula (4)
(SiH amount = 0.0014 mol/g) 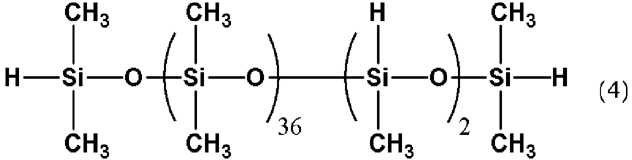
C-4: Methylhydrogendimethylpolysiloxane represented by the following formula (5)
(SiH amount = 0.0010 mol/g) 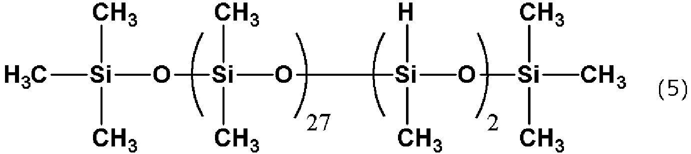
C-5: Methylhydrogendimethylpolysiloxane represented by the following formula (6)
(SiH amount = 0.0013 mol/g)

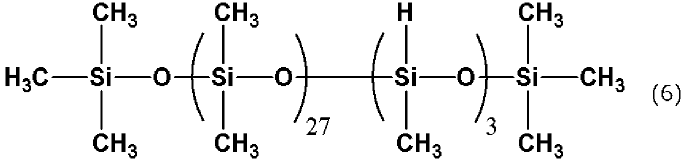

### [Component (D)]

D-1: A solution obtained by dissolving a platinum-divinyltetramethyldisiloxane complex in the same dimethylpolysiloxane as A-4 above (platinum atom content: 1 mass%)

### [Component (E)]

E-1: Dimethylpolysiloxane with one end capped with a trimethoxysilyl group, represented by the following formula (7)

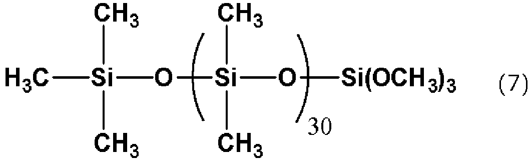

### [Component (F)]

F-1: 1-ethynyl-1-cyclohexanol represented by the following formula (8)

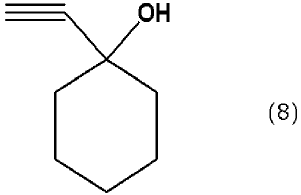

### [Component (G)]

G-1: Organosilane represented by the following formula (9)

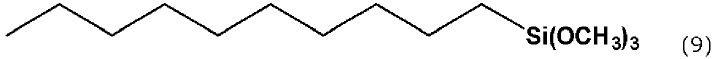

### [Examples 1 to 4 and Comparative Examples 1 to 5]

### <Preparation of thermally conductive addition-curable silicone composition>

The above components (A) to (G) were blended in the amounts shown in Tables 1 and 2 below, using the method described below, to prepare a thermally conductive addition-curable silicone composition. Note that in Tables 1 and 2, SiH/SiVi is the ratio of the total number of SiH groups in the component (C) to the total number of vinyl groups in the component (A).

The components (A), (B), (E), and (G) were added to a 5-liter Planetary Mixer (manufactured by INOUE MFG., INC.) and mixed at 170°C for 1 hour. The mixture was cooled to 40°C or less, and then the components (C), (D), and (F) were added and mixed until uniform to prepare a thermally conductive addition-curable silicone composition. The prepared thermally conductive addition-curable silicone composition was subjected to measurements of viscosity, thermal conductivity, the time required for the storage modulus to exceed the loss modulus, and the storage stability at 25°C described below. The results are shown in Tables 1 and 2.

### [Viscosity]

The absolute viscosity of each thermally conductive addition-curable silicone composition was measured at 25°C using a Malcolm viscometer (Type PC-1T) (rotor A at 10 rpm, shear rate 6 [1/s]).

### [Thermal conductivity]

Each thermally conductive addition-curable silicone composition was wrapped in kitchen wrap, and the thermal conductivity was measured using a TPS-2500S manufactured by KYOTO ELECTRONICS MANUFACTURING CO., LTD.

### [Time required for storage modulus to exceed loss modulus]

Each thermally conductive addition-curable silicone composition was applied at a 2 mm thickness between two parallel plates each having a diameter of 2.5 cm. A program to maintain the temperature at 150°C for 7,200 seconds after heating the coated plates from 25°C to 150°C at 5°C/min was created, and the time required for the storage modulus to exceed the loss modulus was read. Note that a viscoelasticity measuring device (ARES-G2, manufactured by TA Instruments, Inc.) was used for the measurement.

### [Storage stability at 25°C]

Each thermally conductive addition-curable silicone composition was sealed in a high-density polyethylene container and stored at 25°C, and the time until the viscosity exceeded 1,000 Pa·s was measured.

**[Table 1]**

| | | Example | | | |
|---|---|---|---|---|---|
| | | 1 | 2 | 3 | 4 |
| Composition | A-1 (parts by mass) | | | | |
| | A-2 (parts by mass) | 34 | | | 34 |
| | A-3 (parts by mass) | | 34 | 34 | |
| | A-4 (parts by mass) | | | | |
| | A-5 (parts by mass) | | | | |
| | Mass% of component (A) based on total composition | 1.7 | 1.8 | 2.0 | 2.1 |
| | B-1 (parts by mass) | 1098 | 1168 | | |
| | B-2 (parts by mass) | | | 925 | 1040 |
| | B-3 (parts by mass) | 898 | 779 | 757 | 560 |
| | b-4 (parts by mass) | | | | |
| | b-5 (parts by mass) | | | | |
| | b-6 (parts by mass) | | | | |
| | Mass% of component (B) based on total composition | 93.5 | 93.3 | 92.4 | 92.0 |
| | C-1 (parts by mass) | 0.15 | 0.18 | 0.18 | 0.15 |
| | C-2 (parts by mass) | 0.26 | 0.30 | 0.30 | 0.26 |
| | C-3 (parts by mass) | 1.7 | 2.0 | 2.0 | 1.7 |
| | C-4 (parts by mass) | | | | |
| | C-5 (parts by mass) | | | | |
| | D-1 (parts by mass) | 0.09 | 0.09 | 0.09 | 0.09 |
| | Platinum content (ppm) based on total composition | 0.42 | 0.43 | 0.49 | 0.52 |
| | E-1 (parts by mass) | 102 | 102 | 102 | 102 |
| | Mass% of component (E) based on total composition | 4.8 | 4.9 | 5.6 | 5.9 |
| | F-1 (parts by mass) | 0.07 | 0.07 | 0.07 | 0.07 |
| | G-1 (parts by mass) | | | | |
| | SiH/SiVi (number ratio) | 2.6 | 2.2 | 2.2 | 2.6 |
| Evaluation result | Viscosity (Pa·s) | 350 | 275 | 230 | 340 |
| | Thermal conductivity (W/m·K) | 6.7 | 6.4 | 4.9 | 5.0 |
| | Time required for storage modulus to exceed loss modulus (s) | 350 | 300 | From start, storage modulus > loss modulus | From start, storage modulus > loss modulus |
| | Storage stability at 25°C (day) | 14 days or more | 14 days or more | 14 days or more | 14 days or more |

**[Table 2]**

| | | Comparative Example | | | | |
|---|---|---|---|---|---|---|
| | | 1 | 2 | 3 | 4 | 5 |
| Composition | A-1 (parts by mass) | 34 | | 23 | 20 | |
| | A-2 (parts by mass) | | | | | 34 |
| | A-3 (parts by mass) | | | | | |
| | A-4 (parts by mass) | | 100 | | 61 | |
| | A-5 (parts by mass) | | | 35 | 15 | |
| | Mass% of component (A) based on total composition | 2.0 | 9.7 | 2.0 | 1.8 | 1.7 |
| | B-1 (parts by mass) | | | | | |
| | B-2 (parts by mass) | | | | | |
| | B-3 (parts by mass) | 272 | 180 | 538 | 999 | 898 |
| | b-4 (parts by mass) | 1326 | | | | |
| | b-5 (parts by mass) | | 732 | 2450 | 4574 | |
| | b-6 (parts by mass) | | | | | 1098 |
| | Mass% of component (B) based on total composition | 92.1 | 88.6 | 92.1 | 92.9 | 93.5 |
| | C-1 (parts by mass) | 0.11 | | | | 0.15 |
| | C-2 (parts by mass) | 0.19 | | | | 0.26 |
| | C-3 (parts by mass) | 1.3 | | 3.7 | 8.4 | 1.7 |
| | C-4 (parts by mass) | | | 1.6 | 3.4 | |
| | C-5 (parts by mass) | | 11.4 | | | |
| | D-1 (parts by mass) | 0.09 | 0.15 | 0.52 | 1.1 | 0.09 |
| | Platinum content (ppm) based on total composition | 0.52 | 1.47 | 1.60 | 1.83 | 0.42 |
| | E-1 (parts by mass) | 102 | | 192 | 320 | 102 |
| | Mass% of component (E) based on total composition | 5.9 | 0 | 5.9 | 5.3 | 4.8 |
| | F-1 (parts by mass) | 0.07 | 0.23 | 0.12 | 0.23 | 0.07 |
| | G-1 (parts by mass) | | 6.0 | | | |
| | SiH/SiVi (number ratio) | 2.5 | 1.1 | 0.7 | 1.2 | 2.6 |
| | Viscosity (Pa·s) | 115 | 110 | 160 | 230 | 410 |
| | Thermal conductivity (W/m·K) | 6.0 | 3.4 | 5.7 | 6.2 | 6.0 |
| Evaluation result | Time required for storage modulus to exceed loss modulus (s) | 616 | 940 | 600 | 420 | 593 |
| | Storage stability at 25°C (day) | 14 days or more | 12 days | 4 days | 2 days | 14 days or more |

From the results in Tables 1 to 2, in the thermally conductive addition-curable silicone compositions satisfying the requirements of the present invention in Examples 1 to 4, it was found that the time required for the storage modulus G' to exceed the loss modulus G" is 500 seconds or less, and it takes 5 days or more for the viscosity to exceed 1,000 Pa·s when stored at 25°C.

Meanwhile, in the thermally conductive addition-curable silicone compositions of Comparative Examples 1, 2, and 5, it was found that the time required for the viscosity to exceed 1,000 Pa·s is 5 days or more when stored at 25°C, but it takes 500 seconds or more for the storage modulus G' to exceed the loss modulus G". In addition, in the thermally conductive addition-curable silicone composition of Comparative Example 3, it was found that the time required for the storage modulus G' to exceed the loss modulus G" is 500 seconds or more, and it takes less than 5 days for the viscosity to exceed 1,000 Pa·s when stored at 25°C. Further, in the thermally conductive addition-curable silicone composition Comparative Example 4, it was found that the time required the storage modulus G' to exceed the loss modulus G" is 500 seconds or less, but it takes less than 5 days for the viscosity to exceed 1,000 Pa·s when stored at 25°C.

As described above, according to the present invention, it was found that the thermally conductive addition-curable silicone composition of the present invention in which the time required for the storage modulus G' to exceed the loss modulus G" is short time of 500 seconds or less, and it takes 5 days or more for the viscosity to exceed 1,000 Pa·s when stored at 25°C, thus the storage stability is favorable can be obtained when the viscoelasticity measuring device described above is used under the above temperature conditions. As a result, the thermally conductive addition-curable silicone composition of the present invention can be suitably used for electronic component packages and power modules with large warping. In addition, it has been found that the method for manufacturing the thermally conductive addition-curable silicone composition of the present invention can reliably provide a thermally conductive addition-curable silicone composition that can be suitably used for electronic component packages and power modules with large warping.

Note that the present invention is not limited to the embodiments described above. The above embodiments are illustrative, and any configuration that is substantially identical to the technical idea described in the claims of the present invention and achieves similar effects is included within the technical scope of the present invention.

## Claims

1. A thermally conductive addition-curable silicone composition, comprising:
(A) an organopolysiloxane having at least one aliphatic unsaturated hydrocarbon group in one molecule and a kinematic viscosity of 60 to 100,000 mm²/s at 25°C: an amount of 1.5 to 90 mass% based on a total composition;
(B) a thermally conductive filler including amorphous aluminum nitride powder and amorphous zinc oxide powder: an amount of 8 to 96 mass% based on the total composition;
(C) an organohydrogenpolysiloxane having two or more hydrogen atoms bonded to silicon atoms in one molecule: an amount such that the number of Si-H groups in component (C) is 0.5 to 10 based on a total number of aliphatic unsaturated hydrocarbon groups in the component (A);
(D) a platinum group metal catalyst: an effective amount;
(E) an organopolysiloxane represented by the following general formula (1): an amount of 0.5 to 10 mass% based on the total composition, 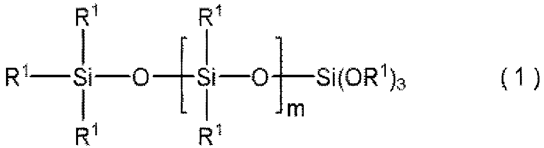 wherein R¹ represents a monovalent hydrocarbon group having 1 to 18 carbon atoms and optionally having a substituent and represents a monovalent hydrocarbon group not including an aliphatic unsaturated bond, each R¹ is the same or different, and m is an integer of 5 to 100; and
(F) one or more addition-curing reaction control agents selected from the group consisting of acetylene compounds, nitrogen compounds, organophosphorus compounds, oxime compounds and organochloro compounds: an effective amount.

2. The thermally conductive addition-curable silicone composition according to claim 1, wherein
the (C) component is an organohydrogenpolysiloxane having two epoxy ring-containing organic groups in one molecule.

3. The thermally conductive addition-curable silicone composition according to claim 1 or 2, wherein
the time required for a storage modulus G' to exceed a loss modulus G" is 500 seconds or less when the storage modulus G' and loss modulus G" of the thermally conductive addition-curable silicone composition are measured using a viscoelasticity measuring device capable of measuring shear elasticity while a temperature is maintained at 150°C for 7,200 seconds after raised from 25°C to 150°C at 5°C/min, and
it takes 5 days or more for a viscosity of the thermally conductive addition-curable silicone composition stored at 25°C to exceed 1,000 Pa·s.

4. A method for manufacturing a thermally conductive addition-curable silicone composition, the method comprising the steps of:
preparing the following component:
(A) an organopolysiloxane having at least one aliphatic unsaturated hydrocarbon group in one molecule and a kinematic viscosity of 60 to 100,000 mm²/s at 25°C: an amount of 1.5 to 90 mass% based on the total composition;
(B) a thermally conductive filler including amorphous aluminum nitride powder and amorphous zinc oxide powder: an amount of 8 to 96 mass% based on the total composition;
(C) an organohydrogenpolysiloxane having two or more hydrogen atoms bonded to silicon atoms in one molecule: an amount such that the number of Si-H groups in the component (C) is 0.5 to 10 based on a total number of aliphatic unsaturated hydrocarbon groups in the component (A);
(D) a platinum group metal catalyst: an effective amount;
(E) an organopolysiloxane represented by the following general formula (1): an amount of 0.5 to 10 mass% based on the total composition, 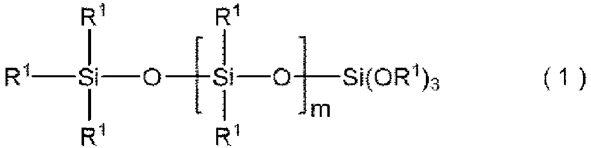 wherein R¹ represents a monovalent hydrocarbon group having 1 to 18 carbon atoms and optionally having a substituent and represents a monovalent hydrocarbon group not including an aliphatic unsaturated bond, each R¹ is the same or different, and m is an integer of 5 to 100; and
(F) one or more addition-curing reaction control agents selected from the group consisting of an acetylene compound, a nitrogen compound, an organophosphorus compound, an oxime compound, and an organochloro compound: an effective amount; and
mixing the components (A) to (F) while heating at 40 to 170°C.

5. The method for manufacturing a thermally conductive addition-curable silicone composition according to claim 4, wherein, in terms of the thermally conductive addition-curable silicone composition obtained by the method,
the time required for a storage modulus G' to exceed a loss modulus G" is 500 seconds or less when the storage modulus G' and loss modulus G" of the thermally conductive addition-curable silicone composition are measured using a viscoelasticity measuring device capable of measuring shear elasticity while a temperature is maintained at 150°C for 7,200 seconds after raised from 25°C to 150°C at 5°C/min, and
it takes 5 days or more for a viscosity of the thermally conductive addition-curable silicone composition stored at 25°C to exceed 1,000 Pa·s.
